Europäisches Patentamt

(19) European Patent Office

Office européen des brevets

(11) Publication number : **0 466 672 A1**

## (12) EUROPEAN PATENT APPLICATION

(21) Application number : **91850187.5**

(22) Date of filing : **11.07.91**

(51) Int. Cl.⁵ : **H02P 6/02**

(30) Priority : **12.07.90 SE 9002419**

(43) Date of publication of application :
**15.01.92 Bulletin 92/03**

(84) Designated Contracting States :
**AT BE CH DE DK ES FR GB GR IT LI LU NL SE**

(71) Applicant : **AB SKF**
**S-415 50 Göteborg (SE)**

(72) Inventor : **Lind, Björn**
**Billdals Häggväg 8**
**S-427 00 Billdal (SE)**

(74) Representative : **Westman, Börje et al**
**Göteborgs Patentbyra AB Box 5005**
**S-402 21 Göteborg (SE)**

(54) **Inverter.**

(57)    Method and a device in a drive system for a DC- motor comprising an inverter and a multiple phase synchronous machine with a permanent magnet rotor, and provided with a rotor position detection means (5) in order to generate a rotation dependent logical position signal or signals. An optimization function is used, which is based on the rotation dependent logical signals (POS 1, POS 2, POS 3) from said rotor position detection means whereby the commutation points each are displaced by a control unit individually such, that at said optimization function maximum driving shaft output power is detected to eliminate defects caused by unsymmetries in the motor iron or the windings as well as unsymmetries of the rotor magnet and by means of said function optimize motor performance with respect to e.g. efficiency at present velocity and load, maximum acceleration and motor vibrations.

EP 0 466 672 A1

FIG. 9

The present invention refers to inverters for driving brushless DC-operated electrical motors. In particular the invention refers to a method by a drive system for a DC- motor comprising an inverter and a multiple phase synchronous machine with a permanent magnet rotor, and provided with a rotor position detection means in order to generate a rotation dependent logical position signal or signals.

## BACKGROUND OF THE INVENTION

A brushless or commutator free DC- machine generally comprises a permanent magnet synchronous machine which is fed by a converter controlled by magnetic or optical sensors arranged on the motor shaft, said sensors provide a pattern of output signals corresponding to the rotor position of said machine. A synchronous machine with a feeding equipment of the kind is normally self-commutating, that is it operates in principle in the same way as a DC -machine with mechanical commutation.

In order to keep the losses of the synchronous machine as small as possible, the waveform of the output voltage from the inverter should be adapted as well as possible to the waveform of the back- EMF generated by the machine, which normally is sinusoidal. By using switching technique in the inverter, the losses in this can be kept low, but consideration must also be taken to influence of harmonics in the stator winding which are generated as a result of the square wave of the inverter and which harmonics do not contribute to the torque of the synchronous machine.

When inverting at high operating frequencies corresponding to high rotational speeds (100 000 r.p.m) of the machine in question it is essential to keep the number of switchings per electric feeding period as low as possible in order to avoid substantial losses in the inverter. At high r.p.m. it is also important that the switching is performed in such a way that the output power per volume unit will be as large as possible. The difference between the calculated mechanical setting of the magnetic sensors (e.g. Hall sensors) or optical sensors and the actual setting which is influenced by unsymmetries of the rotor, the stator windings and stator iron is critical with respect to the efficiency of the machine especially at high rotor speeds. This increases the costs of production of such a machine since measures have to be taken for a final adjustment of the sensors. In certain cases also separate commutating magnets are used in order to avoid influence from the stator field, which involves an additional material and assembly cost in addition to the costs of a device for final adjustment and the sensors per se.

## THE OBJECTS OF THE INVENTION AND MOST ESSENTIAL FEATURES

It is a first object of the invention to provide an inverter for a self-commutating DC supplied permanent magnet synchronous machine, whereby said inverter and synchronous machine form a motor system in which the number of switchings per electric feeding period are reduced to a minimum.

A second object of the invention is to provide a function for optimization of motor performance with respect to efficiency at present velocity and load condition, maximum acceleration and motor vibrations.

A third object of the invention is to provide a method to displace the switching times such that the switching times can be optimized dynamically with respect to the utilization factor or power per unit volume of said machine.

A fourth object of the invention is to provide a DC -control system in which the start of the rotation of rotor is effected without sensors at the rotor.

The above objects are achieved according to the present invention by providing a three phase inverter with voltage stiff output and 180° commutation angle for the commutation signals the features of which are evident from the characterizing parts of accompanying set of patent claims.

With reference to the accompanying drawing in the following preferred embodiments of the present Invention are described.

In the drawing

Fig. 1 shows a block diagram in principle over a first embodiment of a motor system comprising an inverter according to the invention;

Fig. 2 shows a block diagram in principle over a second embodiment of a motor system comprising a modified inverter according to the invention in which the fifth harmonic has been eliminated;

Fig. 3 shows a block diagram over a control unit included in the first and second embodiments of the motor system according to the invention;

Fig. 4a shows a simplified diagram for the inverter included in the motor system according to the first embodiment of the invention;

Fig. 4b shows a vector diagram for the inverter included in the motor system according to the invention;

Fig. 5a-e shows timing diagrams for the inverter included in the motor system according to the invention;

Fig. 6 shows position signals and output signals from the control unit in a 6- pulse system;

Fig. 7 shows position signals and output signals from the control unit in a 12 - pulse system;

Fig. 8a shows commutating positions for a two pole motor which is used with the inverter according to the invention;

Fig. 8b shows a timing diagram for modification of the commutation positions;

Fig. 9 shows a block diagram over a circuit which performs the timing diagram according to fig. 7;

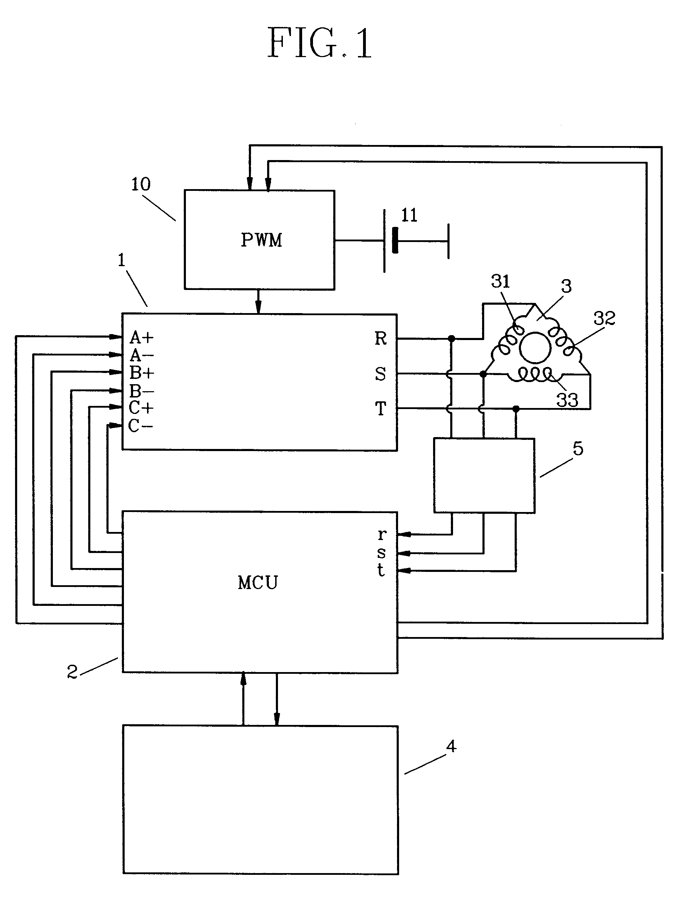

With reference to Fig. 1 a block diagram is shown over a motor system of 6 - pulse design according to the present invention.

A three phase inverter 1 with its outputs R,S and T is connected to respective stator windings 31,32 and 33 via the lines 51, 52 and 53 where each winding comprises one phase of a preferably permanently magnetized synchronous machine 3 the permanent magnet rotor of which can comprise 2 poles.

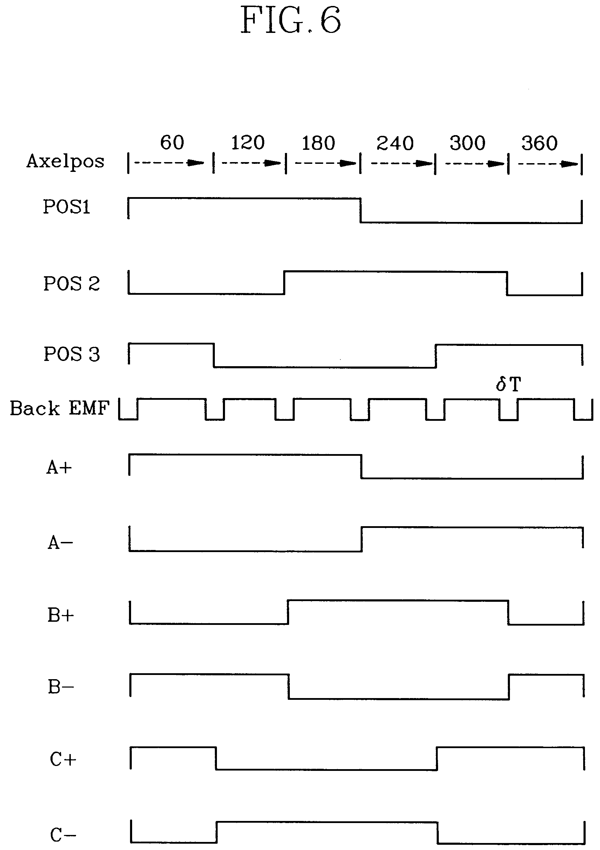

The inverter 1 comprises 6 valves which are controlled from the inputs A+ - C- which in their turn are connected to corresponding outputs of the control unit 2. On the inputs r,s and t of the control unit 2 are supplied rotor position signals from the back - EMF detector 5 which detects zero passages on the supply lines 51, 52 and 53. The resulting signal pattern from the back- EMF and corresponding control signals is shown in Fig. 6. The inverter is fed from a battery 11 via a control unit 10 which operates with pulse width modulation (PWM) from the control unit 2. The function of the control unit 2 is supervised by the supervising unit comprising a u - processor.

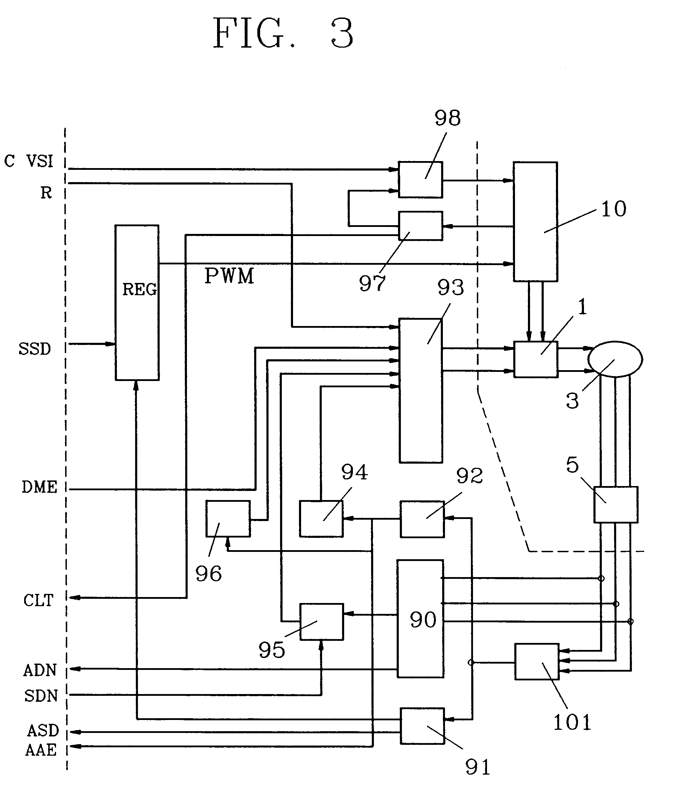

From the interface of the control unit 2 (see Fig. 3) versus the supervising unit 4 there are information signals about current limiting CLT (CURRENT LIMIT), present rotational speed ASD (ACTUAL SPEED) and rotor position AAE (ACTUAL ANGLE) inclusive direction of rotation ADN (ACTUAL DIRECTION).

The control signal SSD (SET SPEED) gives the pulse width modulation a certain ratio correspnding to a certain effective voltage supplied to the inverter 1. The rotational speed of the motor is directly proportional to the supply voltage of the inverter.

The control signal DME (DRIVER MODE) comprises commands for rotational direction, braking, normal operation and impulse start.

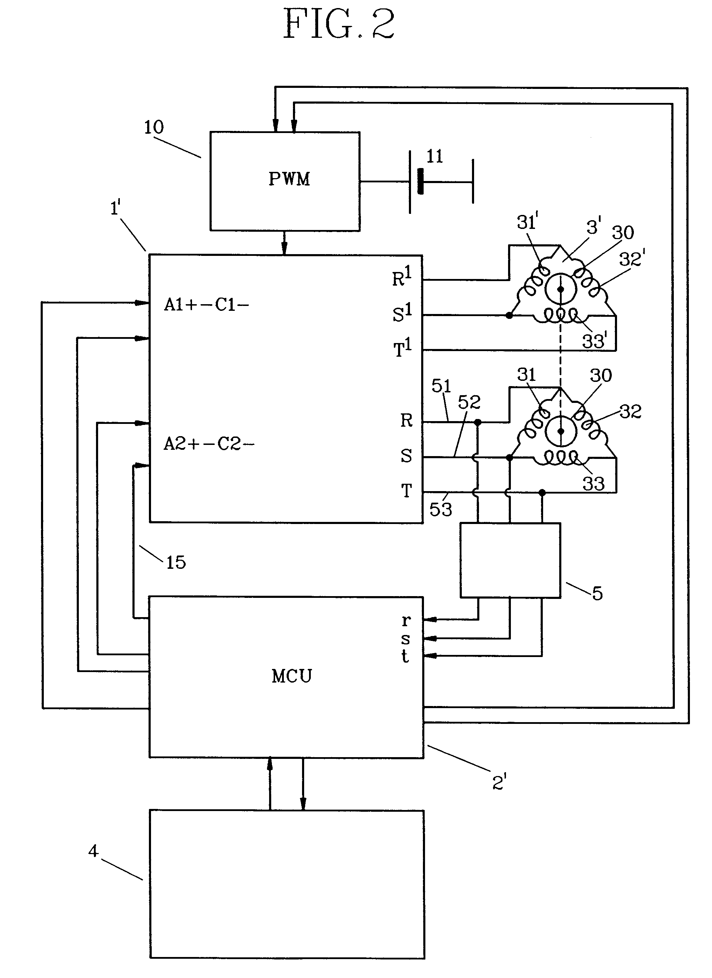

With reference to Fig. 2 a 12-pulse application of the motor system according to the present invention, which gives an elimination of the fifth harmonic.

The three phase inverter 1' comprises 12 valves which are controlled from the inputs A1+ - C1- och A2+ - C2- which in turn are connected to corresponding outputs of the control unit 2'.

The inverter from its outputs R,S,T and R',S',T' feeds respective sets of stator windings 31,32,33 and 31', 32', 33', in the permanent magnet synchronous machine 3'.

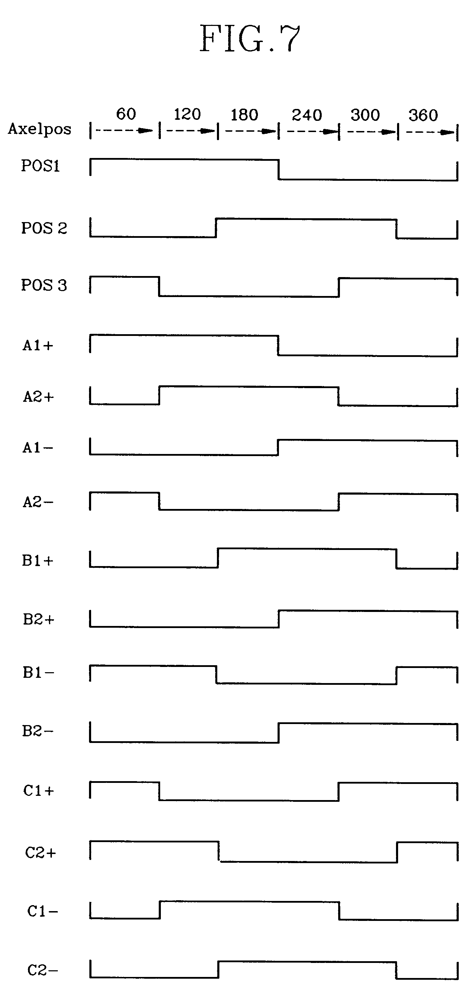

The position signals from the Back - EMF - detector 5 and resulting operating signals are illustrated in Fig. 7.

The operating voltages RST and R',S',T' are 60 degrees displaced with respect to each other and in the resulting stator flow influence of the fifth and seventh harmonics is eliminated with corresponding raise in the efficiency, see further in the specification page 7, eq. 1-4.

The motor system according to Fig. 2 for the rest has a function similar to that accounted for i connection to Fig. 1.

With reference to Fig. 3 a block diagram over the control unit 2 is shown, which contains detecting means for r.p.m 91 and rotational direction 90. In the commutating detector the commutating angles are detected. The angle values obtained in the block 92 are modified in the angle modifying block 94. The signals from the block 94 are transformed in the timing logic 93 to the control signals A+ - C- which have been modified by gating with the back-EMF signals from the block 96.

In order to make measuring of the power supplied to the system possible the current can be detected in the current detector 97 and a suitable current be set on the current limiter 98 from the supervising unit 4 by means of the signal CVSI (CURRENT VOLTAGE SOURCE INVERTER).

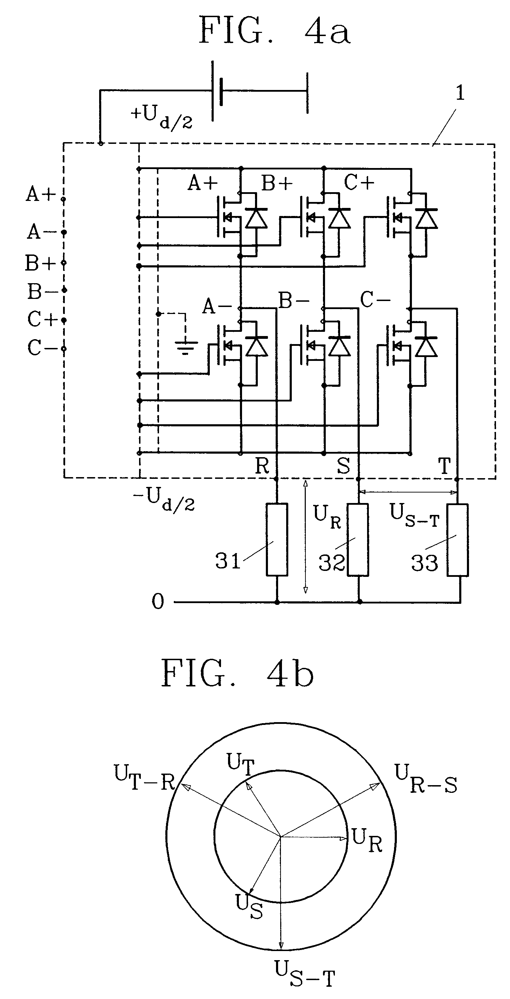

With reference to fig. 4a is shown a basic circuit diagram over the inverter 1, which consists of a three phase bridge with the controllable valves A+, A-, B+, B-, C+, C- which can be constituted by a MOS-transistor with an integrated back diode D. The outputs R,S and T from the three phase bridge are connected respectively to each phase of a syncronous machine with a permanent magnet rotor whereby the phases 31,32,33 with identical impedances are connected in Y - configuration in order to easily illustrate the function of the inverter. The three phase bridge is connected to the symmetrical supply voltages + $U_d/2$ and -$U_d/2$.

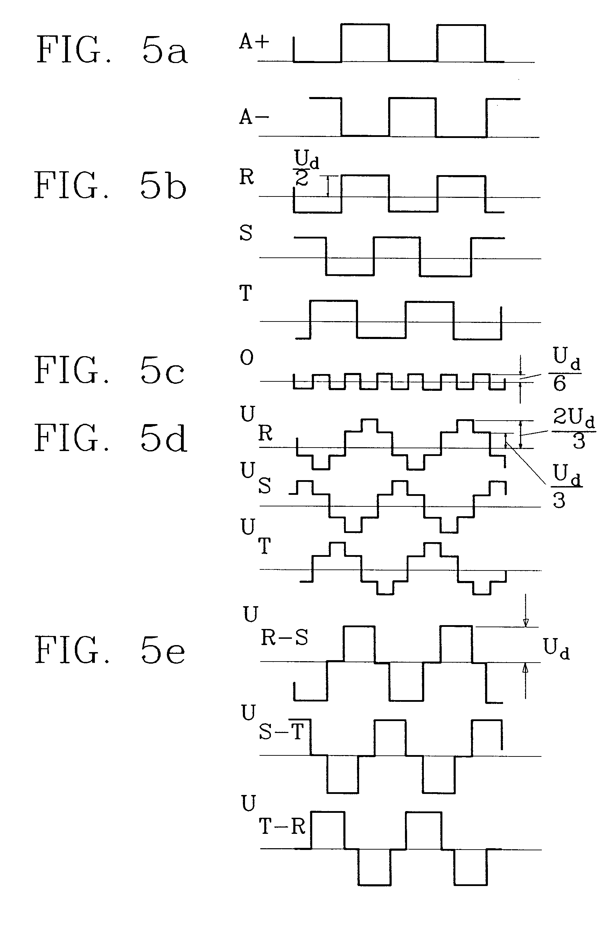

With reference to fig. 4 and fig. 5 the operating priciple for the inverter 1 will be described.

On the inputs 10 - 14 of the inverter 1 signals from the control unit 2 are received in response to detected voltage levels on the supply lines 51- 53. Through a program in the control unit a phase line eg. 51 is isolated from the inverter at a preselected angle during a certain time period $\delta T$ so that the EMF or the back - EMF which is generated by the rotating field produced by the permanent magnet excited rotor of the machine can be detected, see diagram in fig. 6. Through digital signal processing in the control unit a set of signals is created which can be seen in fig. 5a for generation of the potential wave forms on the alternating current outputs R,S,T according to fig. 5b. from this can be seen, that these wave forms are three square wave voltages with the amplitude $U_d/2$ and 120° phase shift.

The square wave voltages consist of odd harmonics with the mean square values

$$U_{(1)} = 0.9\ U_d/2 = 0.45\ U_d \quad (1)$$
$$U_{(3)} = 1/3\ U_{(1)} \quad (2)$$
$$U_{(5)} = 1/5\ U_{(1)} \quad (3)$$
$$U_{(7)} = 1/7\ U_{(1)} \quad (4)$$

and so on

If $v_R$, $v_S$ and $v_T$ are the three phase potentials and $i_R$, $i_S$ and $i_T$ are the corresponding currents through the same impedances Z which connect the AC-terminals to the (real eller imaginary) neutral point of the three phase system, the potential of the potential of the neutral of the neutral point can be calculated from

$$v_R - v_O = Z\, i_R\ ( = u_R)\quad (5)$$
$$v_S - v_O = Z\, i_S\ ( = u_S)\quad (6)$$
$$v_T - v_O = Z\, i_T\ ( = u_T)\quad (7)$$

The three equations are added. Since the sum of currents is zero, the following is valid

$$v_R + v_S + v_T - 3v_O = Z(i_R + i_S + i_T) = 0\quad (8)$$

or

$$v_O = (v_R + v_S + v_T)/3$$

The potential wave form of the neutral is a third of the sum of the three phase potential wave forms. It is a square wave, see fig. 5c with an amplitude of $1/3 * 1/2\ U_d$ and a fundamental frequency which is three times the frequency of the inverter. Therefore it only contains harmonics with the harmonic sequence which are multiples of 3, and the harmonics have the same amplitude and phase as corresponding harmonics of the phase potentials.

The phase voltages $u_R$, $u_S$ and $u_T$, see fig. 5d, is the difference between the potentials of R, S, and T and the potential of the neutral point. Of what has been said about the harmonic content of the neutral point, the result is that voltages will contain the same harmonic components as the square waves, which blocks multiples of harmonics of three since these will be eliminated.

The phase to phase voltages or main voltages $u_{R-S}$, $u_{S-T}$ and $u_{T-R}$ can either be calculated as the difference between corresponding phase voltages, eg. $u_{R-S} = u_R - u_S$, or as the difference between corresponding square wave potentials. The phase to phase voltages are semi square voltages with conduction intervals of 120° and with the same harmonics as the phase voltages, see fig 5e.

In order to further illustrate the operating principle of the inverter 1 a vector diagram is shown for the fundamental components of the phase voltages $u_R$, $u_S$ and $u_T$ and the main voltages $u_{R-S}$, $u_{S-T}$ and $u_{T-R}$.

With reference to the block diagram in fig. 3 a starting sequence for the motor 3 is described in the following. At zero frequency, that is at idle rotor the back- EMF is equal to zero on the lines 51-53. According to the invention a first current pulse is given to the rotor via the supervising unit 4 the activation signal (DRIVER MODE, START) to an input to an input of the timing logic 93 in the control unit 2 whereby a stator winding eg. 31 recieves a current pulse which gives rise to an arbitrary magnetic field, whereby if no back-EMF is detected, a second current pulse is supplied through eg. 32 which produces a magnetic field the direction of which does not coincide with the first. If back-EMF,that is rotation thereby is detected in the speed detector 91, which also implies that the direction can be detected in the direction detector 90, a third current pulse is supplied which produces a magnetic flow which maintains the produced rotation direction (ACTUAL DIRECTION) if this direction is the desired or shifts said direction so that further detected back- EMF on the lines 51-53 gives a set of control - signals on the timing logic 93 to obtain the intended rotational speed (SET SPEED).

One of the main functions of the control unit 2 is to make possible an optimization of the power consumtion at the operation of a high speed motor.

According to the invention this optimization is performed by displacing the commutating or the firing points. Because of unsymmetries in the stator iron, the stator windings and the permanent magnetized rotor the back-EMF does not give quite optimal commutating information for all 60 degrees commutating intervals.

Thus an optimization function is used, which is based on the rotation dependent logical signals from the Back-EMF detector 5 by means of which the firing points are displaced such, that at said optimization function maximum driving shaft output power is detected to eliminate defects caused by unsymmetries in the motor iron or the windings as well as unsymmetries of the rotor magnet and by means of said function optimize motor performance with respect to e.g. efficiency at present velocity and load, maximum acceleration and motor vibrations.

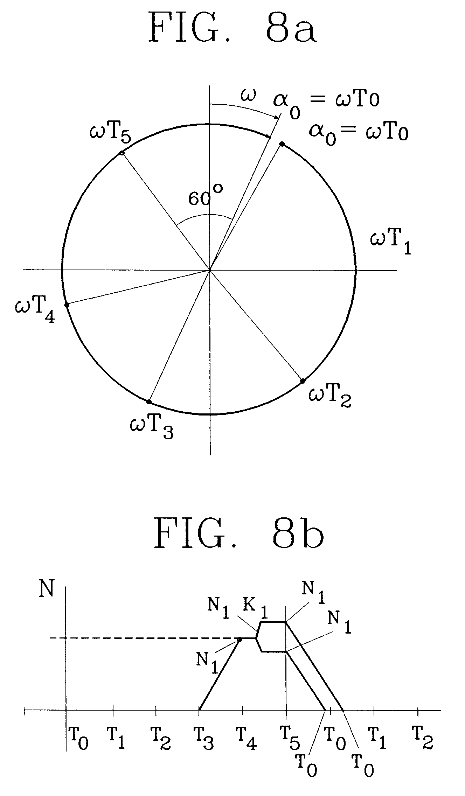

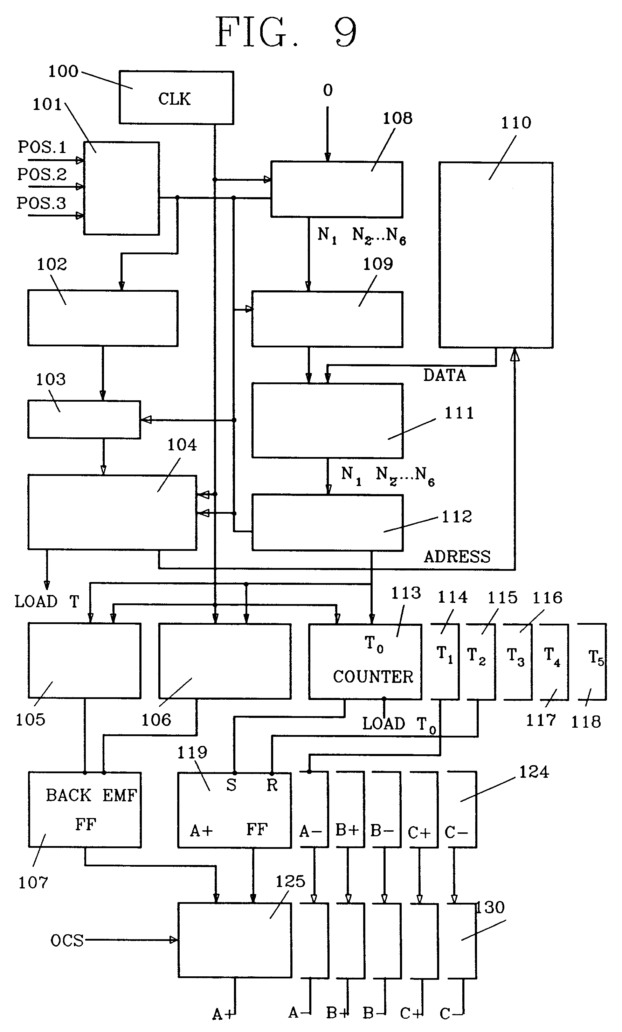

With reference to fig. 8a is shown a diagram over commutating times during a part of a rotor shaft revolution. Every time indicated on the circle corresponds to a displacement of 60 electric degrees, which in turn corresponds to movement of the rotor of 20°. With reference to the diagram fig. 8b and the block diagram fig. 9 a new commutating point of time is created in following way:

The reference position for the commutation time $T_O$ is $T_5$ from which a new commutation time or firing point $T_O'$shall be created.

With reference to the block diagram fig. 9 from the back-EMF detector are emitted the logical position signals POS 1, POS 2 and POS 3 and enter the pulse detector 101 which creates a pulse train corresponding to the commutation times $T_O$ - $T_5$. The position counter 102 all the time calculates the position starting from a reference eg. $T_O$. The position is stored in a register 103 and transmitted to a decoder and controller 104 the block of which contains logic which decodes the position to fetch corresponding constant for multiplication and load the result in the correct counter 113 - 118 corresponding to the new commutation points of time $T_O'$ - $T_5'$.

Every pulse in the pulse train gives a count of a number of clock pulses in the counter 108 equal to $N_1,N_2,.. N_6$. Corresponding binary number (16 bits) is stored in a register 109 to thereafter be transmitted to the multiplicator 111 in which a multiplication is carried out by a constant from the constant memory 110. The new value of $N_1$ equal to $N_1'$ is stored in a register 112 to be loaded in the counters 113 - 118. By counting down with the clock frequency from the clock generator 100 in for example the counter 113 a modified commutating time $T_O'$ is created. In the logic block 119-124 the time modified control signals $A'+$, $A'-$, ...$C'-$ are recreated.

In order to accomplish the sampling time window $\delta T$ necessary for back - EMF sensing two counters 105 and 106 are provided which respectively give start and stop for counting of a determined number of clock pulses for every commutating point of time. The signals from the counters 105 and 106 trigger a flip-flop 107 the output of which is connected to a control logic 125-130. This logic has further inputs OCS (OTHER CONTROL SIGNALS) for controlling the control signals $A'+$, $A'-$, ...$C'-$ depending on certain conditions as choice of direction of rotation, braking command and control of current to a desired stator winding at a starting sequence.

With reference to fig. 8b a counter 108 at the time $T_3$ starts counting of pulses from the reference oscillator 100 which in the present embodiment has a frequency of 10 MHz. At the time $T_4$ the count is interrupted and the result $N_1$ pulses is brought to the register 109.

A modification of the reference time $T_4 - T_3 = dT_4$ corresponding to $N_1$ pulses in the present embodiment takes place by multiplication with a factor $k_1$ which is stored as a binary number in the memory 110 whereby multiplication takes place during the time section $T_5 - T_4 = dT_5$. The result $N_1'$ of the multiplication in said multiplicator 111 is stored in a register 112 the contents of which at the time $T_5$ is counted down with the clock frequency from 100 in the counter 113. At the value zero in the counter 113 a pulse is obtained corresponding to the new commutation point $T_O'$ alternatively $T_O''$, see fig. 8b. When $k_1 > 1$ the commutating time is displaced clockwise while $k_1 < 1$ gives a displacement of the commutating point anticlockwise.

In order to further create the modified times $T_1'$ - $T_5'$ in the corresponding way respectively reference times $T_5 - T_4$, $T_O - T_5$ etc. are used. The binary multiplication factors $k_2 - k_6$ corresponding to the reference times are in the corresponding way stored in the memory 110.

## Claims

1.  Method by a drive system for a DC- motor comprising an inverter and a multiple phase synchronous machine with a permanent magnet rotor, and provided with a rotor position detection means in order to generate a rotation dependent logical position signal or signals,

characterized therein,
that an optimization function is used, which is based on the rotation dependent logical signals (POS 1, POS 2, POS 3) from said rotor position detection means whereby the commutation points each are displaced by a control unit individually such, that at said optimization function maximum driving shaft output power is detected to eliminate defects caused by unsymmetries in the motor iron or the windings as well as unsymmetries of the rotor magnet and by means of said function optimize motor performance with respect to e.g. efficiency at present velocity and load, maximum acceleration and motor vibrations.

2.  Method according to claim 1,
    characterized therein,
    that at least one phase output (R,S,T) of the inverter is disconnected during a time period ($\delta T$) at a preselected rotation angle to make possible detection of the voltages which are generated in the stator windings (31,32,33) by rotation of the rotor.

3.  Method according to claim 1 - 2
    characterized therein
    that digital technique is used to displace the commutation points individually to an intended angle referred to said rotation dependent logic position signal or signals (POS 1,POS 2, POS 3),
    that in a first step said position signal is supplied to a pulse detector (101) which creates a pulse train ($T_O - T_5$) corresponding to the commutation reference points of time and
    that in a second step every pulse in said pulse train gives a counting of a number of reference clock pulses ($N_1,N_2,.. N_6$) in a counter (108) and that in a third step corresponding binary numbers are stored in a register to be transmitted to a multiplier (111) in which multiplication takes place with a digital constant ($k_1$) from a constant memory (110).

4.  Method according to claim 3,
    characterized therein,
    that a modification of a reference commutation time formed as the difference between two adjacent commutation points of time (eg. $T_4 - T_3$) corresponding to a certain number of reference clock pulses ($N_1$ pulses) occurs during the subsequent commutation interval ($T_5 - T_4 = dT_5$) whereby the result $N_1'$ of the multiplication in said multiplier (111) is stored in a register (112) the contents of which at the start of the interval ($T_5$), which follows that at which said multiplication occurs, is counted down with the clock frequency from the clock generator (100) in the counter (113) so that at the value zero of the counter (113) is obtained a pulse corresponding to the new commutation point of time ($T_O'$).

5. Method according to claim 1-4
**characterized therein,**
that rotation start for said rotor is created by a short first current pulse in a stator winding, which current pulse gives an arbitrary magnetic field whereby if no rotation is detected a second current pulse is supplied which generates a magnetic field the direction of which does not coincide with the first and if rotation thereby is detected, a third current pulse is supplied which maintains the rotation direction if it is the intended or shifts said direction so that further detected rotation signals directly or indirectly controls the drive system to reach the intended rotation speed.

6. Motor drive system to carry out a method according to claim 1-5, comprising a control unit (2) and a supervising unit (4) for controlling an inverter(1) the outputs (R,S,T) of which emit three phase square waves with 180° commutating angle which drive a synchronous machine (3) with phase windings (31,32,33) and a permanent magnet rotor (30) whereby the inverter (1) is supplied from a pulse width modulated constant voltage source (10),
**characterized therein,**
that the back-EMF detecting circuit (5) is connected between the supply lines (51,52,53) to said synchronous machine (3) and the inputs (r,s,t) of the control unit (2) and that said circuit detects the voltage (back-EMF) induced by the rotor (30) in the stator windings during a time section ($\delta T$) which are generated in the control unit (2) in response to the output signals (POS1, POS2, POS3) from the detecting circuit (5).

7. Motor drive system according to claim 6,
**characterized therein,**
that the stator of the synchronous machine contains two sets of phase windings (31,32,33) and (31',32',33') which are driven from an inverter (1') the outputs (R,S,T) and (R',S',T') of which emit first and second three phase square waves with 180° commutating angle and a phase displacement of 60° between first and second sets of voltage waves in order to suppress fifth and seventh harmonics in the stator (3) of the synchronous machine.

8. Motor drive system according to claims 6 or 7,
**characterized therein,**
that the control unit comprises means for detecting speed (91) and position (90) of the rotor (30) in order to emit information signals (ACTUAL DIRECTION;ACTUAL SPEED) to the supervising unit (4) at start of rotation in response to a start impulse (DRIVER MODE, START) and direction command (DRIVER MODE, DIRECTION) given from the supervising unit (4) to the timing logic (93).

9. Motor drive system according to any of claims 6 - 8
**characterized therein,**
that the control unit comprises an angle modifying block (94) for displacing the commutation times ($T_O$,..$T_5$) in which angle modifying block (94) a first counter (108) is contained which counts clock pulses ($N_1$,..$N_6$) from a reference oscillator (100) between time intervals ($dT_O$,..$dT_5$) obtained from the pulse detector (101) which time intervals correspond to successive zero crossings detected through the back-EMF detector (5) whereby after a multiplication with a constant stored in a constant memory (110) the result ($N_1'$,..$N_6'$) is counted down with the clock frequency reference oscillator (100) in a second counter (113) which gives modified time intervals ($dT_O'$,.. $dT_5'$) for activation of a logic block (119,.. 124) för creation of modified control signals (A'+, ..C'-).

# FIG.1

# FIG.2

# FIG. 3

# FIG. 4a

# FIG. 4b

FIG. 5a

FIG. 5b

FIG. 5c

FIG. 5d

FIG. 5e

EP 0 466 672 A1

# FIG.6

# FIG.7

# FIG. 8a

# FIG. 8b

# FIG. 9

**European Patent Office**

# EUROPEAN SEARCH REPORT

**Application Number**

EP 91 85 0187

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 121 144 (MATSUSHITA ELECTRIC INDUSTRIAL CO., LTD) * Page 14, line 10 - page 15, line 8; figure 6 * | 1 | H 02 P 6/02 |
| A | | 3,9 | |
| Y | EP-A-0 316 077 (SONY CORP.) * Column 7, line 31 - column 8, line 52; column 6, line 19-38; figure 1 * | 1 | |
| A | | 4,5,9 | |
| A | EP-A-0 071 941 (HITACHI LTD) * Page 16, lines 8-21 * | 1,3,9 | |
| A | PATENT ABSTRACTS OF JAPAN, vol. 12, no. 217 (E-624)[3064], 21st June 1988; & JP-A-63 11 085 (AICHI ELECTRIC CO., LTD) 18-01-1988 * The whole document * | 2 | |
| A | PATENT ABSTRACTS OF JAPAN, vol. 10, no. 379 (E-465)[2436], 18th December 1986; & JP-A-61 170 291 (SHINANO DENKI K.K.) 31-07-1986 * The whole document * | 2 | TECHNICAL FIELDS SEARCHED (Int. Cl.5) H 02 P |
| A | PATENT ABSTRACTS OF JAPAN, vol. 11, no. 227 (E-526)[2674], 23rd July 1987; & JP-A-62 44 093 (TOYOTA MOTOR CORP.) 26-02-1987 * The whole document * | 6,8 | |
| A | US-A-4 928 043 (PLUNKETT) * Column 3, lines 3-36,52-55 * -/- | 2,5-6 | |

The present search report has been drawn up for all claims

| Place of search | Date of completion of the search | Examiner |
|---|---|---|
| THE HAGUE | 03-10-1991 | BOURBON R.P.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 251 785 (CONNER PERIPHERALS, INC.)<br>* Column 2, lines 36-62 *<br>--- | 5,6,8 | |
| A | IEEE-IAS-1985, ANNUAL MEETING, Toronto, 6th - 11th October 1985, no. 85CH2207-9, pages 790-797; R. PERRET et al.: "Minimization of torque ripple in brushless DC motor drives"<br>* Page 790, paragraph I *<br>--- | 7 | |
| P,A | WO-A-9 015 473 (PAPST-MOTOREN GmbH & CO.)<br>* Pages 18-20 *<br>----- | 5,6,8 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 03-10-1991 | BOURBON R.P.S. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)